# EUROPÄISCHE PATENTSCHRIFT

(11) **EP 3 408 532 B1**
(45) Veröffentlichungstag und Bekanntmachung des Hinweises auf die Patenterteilung: **28.12.2022**
(21) Anmeldenummer: 17702577.2
(22) Anmeldetag: 26.01.2017
(51) Int. Cl.: F03D 1/06, F03D 80/30, B29C 70/34, B29C 70/88, B32B 5/26, B32B 15/14

(54) **ROTORBLATT EINER WINDENERGIEANLAGE MIT HOLMGURT UND HERSTELLUNGSVERFAHREN**
ROTOR BLADE OF WIND TURBINE COMPRISING A SPAR CAP AND PRODUCTION METHOD
PALE DE ROTOR D'UNE ÉOLIENNE AVEC BRIDE DE LONGERON ET SON PROCÉDÉ DE FABRICATION

(30) Priorität: 29.01.2016 DE 102016101663; 12.10.2016 DE 102016219873
(43) Veröffentlichungstag der Anmeldung: 05.12.2018
(73) Patentinhaber: Wobben Properties GmbH, 26607 Aurich (DE)
(72) Erfinder: RUBNER, Florian, 26607 Aurich (DE); VINKE, Daniel, 26607 Aurich (DE)
(74) Vertreter: Eisenführ Speiser
(86) Internationale Anmeldenummer: PCT/EP2017/051663
(87) Internationale Veröffentlichungsnummer: WO 2017/129686

(56) Entgegenhaltungen:
- EP-A1- 2 815 861
- CN-A- 102 661 240
- CN-A- 103 817 955
- US-A1- 2008 069 699
- US-A1- 2013 149 154
- US-A1- 2014 271 198

## Beschreibung

Die Erfindung betrifft ein Rotorblatt einer Windenergieanlage mit einem Holmgurt für ein Rotorblatt einer Windenergieanlage mit einer Längserstreckung von einem ersten Ende zu einem zweiten Ende, einer Quererstreckung orthogonal zu der Längserstreckung und einer Dicke orthogonal zur Längserstreckung und zur Quererstreckung. Zudem betrifft die Erfindung eine Windenergieanlage mit einem Turm, einer Gondel und einem Rotor, dadurch gekennzeichnet, dass der Rotor mindestens ein Rotorblatt mit einem eingangs genannten Holmgurt aufweist. Darüber hinaus betrifft die Erfindung ein Verfahren zur Herstellung eines eingangs genannten Rotorblatts.

Holmgurte der eingangs genannten Art sind beispielsweise Bestandteile von Rotorblättern, vorzugsweise Rotorblätter von Windenergieanlagen, oder von Flugzeugtragflächen, die insbesondere zur Versteifung in Längsrichtung ausgebildet sind. Eine derartige Versteifung dient insbesondere zur Aufnahme von Kräften, die entlang einer longitudinalen Erstreckung verlaufen, wobei bei Rotorblättern von Windenergieanlagen die zuvor genannte longitudinale Erstreckung von der Wurzel des Rotorblattes bis zur Spitze des Rotorblattes verläuft. Holmgurte sind im Allgemeinen derart gestaltet, dass diese ein erstes und ein zweites Ende aufweisen. Der Holmgurt weist darüber hinaus in der Regel eine flächige Geometrie auf, die durch die Längserstreckung und die Quererstreckung gebildet wird. Orthogonal zu der Quererstreckung und zu der Längserstreckung weist ein Holmgurt eine Dicke auf.

Holmgurte können aus unterschiedlichen Materialien hergestellt sein oder diese umfassen. Derzeit ist es insbesondere üblich Holmgurte aus faserverstärkten Materialien, vorzugsweise faserverstärkten Kunststoffen, herzustellen, da diese bei einem vergleichsweise geringen Gewicht eine hohe Steifigkeit aufweisen. Ferner kann die anisotrope Eigenschaft der faserverstärkten Materialien bei der Herstellung eines Holmgurtes genutzt werden, da dadurch insbesondere eine in Längsrichtung gerichtete Steifigkeit bereit gestellt werden kann. Derzeit werden oftmals glasfaserverstärkte Kunststoffe eingesetzt, da diese einen guten Kompromiss aus hoher Steifigkeit und geringen Kosten darstellen.

Ein Rotorblatt einer Windenergieanlage umfasst in der Regel unter anderem ein oberes und ein unteres Schalenelement. Die Schalenelemente bilden mit ihren äußeren Oberflächen im Wesentlichen die äußere Geometrie des Rotorblattes. Meist enthält das Rotorblatt ein oberes Schalenelement mit einem Holmgurt und/oder ein unteres Schalenelement mit einem Holmgurt. Der Holmgurt ist bzw. die Holmgurte sind in der Regel an einer Innenseite der Schalenelemente angeordnet. Der Holmgurt ist dabei vorzugsweise auf oder an einer inneren Fläche des Schalenelements angeordnet und/oder in das Schalenelement eingebettet.

Die Anforderungen an Holmgurte der eingangs genannten Art sind vielfältig. Um ihrer Funktion der Versteifung des Rotorblatts in Längsrichtung nachzukommen, muss der Holmgurt insbesondere in Richtung seiner longitudinalen Erstreckung eine vergleichsweise hohe Steifigkeit aufweisen. Insbesondere muss diese Steifigkeit höher sein als die Steifigkeit der den Holmgurt umgebenden Elemente, um der Funktion als Längsversteifung gerecht zu werden. Nichtsdestotrotz müssen die Rotorblätter von Windenergieanlagen respektive die in den Rotorblättern enthaltenen Holmgurte trotz der hohen Steifigkeitsanforderung ein geringes Gewicht aufweisen. Ein geringes Gewicht der Rotorblätter reduziert einerseits die Normalkraft an der Nabe der Gondel und andererseits die Fliehkräfte an der Nabe sowie innerhalb der Erstreckung des Rotorblattes.

Insbesondere bei dem Einsatz von faserverstärkten Kunststoffen besteht ein direkter Zusammenhang zwischen der Masse des eingesetzten Materials und den Kosten. Aufgrund der hohen Kosten des faserverstärkten Kunststoffes ist es hier wünschenswert, das eingesetzte Materialvolumen bzw. dessen Masse zu minimieren und dennoch eine hohe Steifigkeit zu erreichen. Eine weitere Anforderung an die Holmgurte der eingangs genannten Art ist, dass diese in das obere und/oder untere Schalenelement des Rotorblattes eingefügt und/oder an den Schalenelementen befestigt werden können.

Windenergieanlagen sind aufgrund ihrer Bauhöhe und der exponierten Standorte verstärkt durch Blitzeinschläge bei Gewittern gefährdet. Dabei treten die Blitzeinschläge in der Regel an der höchsten Stelle der Windenergieanlage ein, die in der Regel durch die Blattspitze gebildet wird. Lediglich bei sehr hohen Anlagen besteht die Möglichkeit von Aufwärtsblitzen, die auch an anderen Stellen der Windenergieeinlagen einschlagen können. Bei einem Blitzeinschlag besteht das Risiko, dass der Blitz in die tragende Struktur der Windenergieanlage einschlägt. Daher besteht die Anforderung, dass das Blitzeinschlagrisiko reduziert wird.

Aufgrund des komplexen Schwingungssystems einer Windenergieanlage ist es eine weitere Anforderung an den Holmgurt, dass dieser dynamische Kräfte aufnehmen kann und insbesondere eine gute Dauerfestigkeit aufweist. Diese Dauerfestigkeit ist unter anderem dahingehend wichtig, da die Holmgurte nicht kontinuierlich überwacht werden können und darüber hinaus deren Austausch in der Regel nicht zerstörungsfrei durchgeführt werden kann.

Holmgurte der eingangs genannten Art sind seit langer Zeit hinlänglich bekannt, insbesondere aus dem Windenergieanlagenbau und dem Flugzeugbau. Aufgrund der steigenden wirtschaftlichen Anforderungen an Windenergieanlagen ist der Trend zu erkennen, dass die Anlagen, hinsichtlich der Nabenhöhe und des Rotordurchmessers, kontinuierlich größer werden. Der Rotordurchmesser steht dabei in einem direkten Zusammenhang mit der Länge der einzelnen Rotorblätter.

Die steigende Größe der Windenergieanlagen wiederum führt zur immer höheren mechanischen Belastungen der einzelnen Komponenten, unter anderem der Komponenten in den Rotorblättern. Durch die steigende Länge der Rotorblätter werden die Fliehkräfte größer und somit auch die einzelnen Kräfte innerhalb solcher Komponenten, die die Längskräfte aufnehmen. Aufgrund dieser steigenden Kräfte ist ein Trend dahingehend zu erkennen, dass die längskraftaufnehmenden Holmgurte an einzelnen Bereichen mit einem größeren Querschnitt orthogonal zur Längsrichtung versehen werden, um die Steifigkeit zur erhöhen. Diese steigende Dicke steht jedoch in einem Zusammenhang mit einem steigenden Gewicht des Holmgurtes.

Aufgrund der steigenden Nabenhöhe und der längeren Rotorblätter steigt das Risiko eines Blitzeinschlages deutlich. Eine Schwierigkeit der heutigen Holmgurte bzw. der Rotorblätter, in denen die Holmgurte eingebaut sind, ist, dass diese anfällig für einen Blitzeinschlag sind. Spezielle Maßnahmen zur Reduktion des Blitzeinschlagrisikos sowie zur Erhöhung der Steifigkeit des Holmgurtes sind oftmals mit hohen Kosten verbunden. Die existierenden Vorrichtungen und Verfahren bieten verschiedene Vorteile, jedoch sind weitere Verbesserungen wünschenswert.

Das Deutsche Patent- und Markenamt hat in der Prioritätsanmeldung zu vorliegender Anmeldung folgenden Stand der Technik recherchiert: DE 10 2011 003 560 B4, DE 10 2008 007 304 A1, DE 10 2009 047 570 A1, DE 10 2010 002 432 A1, DE 10 2013 100 117 A1, DE 202 06 942 U1. Weiterer Stand der Technik ist in CN 103 817 955 A offenbart.

Es ist daher eine Aufgabe der vorliegenden Erfindung, ein Rotorblatt und ein Verfahren zur Herstellung eines Rotorblatts bereitzustellen, welche einen oder mehrere der genannten Nachteile vermindern oder beseitigen. Insbesondere ist es eine Aufgabe der Erfindung, ein Rotorblatt und ein Verfahren zur Herstellung eines Rotorblatts bereitzustellen, welche eine steifere Konfiguration des Rotorblattes ermöglichen. Darüber hinaus ist es eine Aufgabe der Erfindung ein Rotorblatt mit einem verringerten Blitzeinschlagrisiko bereitzustellen. Die erfindungsgemäße Aufgabe wird gemäß einem ersten Aspekt gelöst durch ein Rotorblatt einer Windenergieanlage gemäß Anspruch 1.

Die Längserstreckung von dem ersten Ende zu dem zweiten Ende ist eine Längserstreckung in eine Richtung des Holmgurtes, die der längsten Ausdehnung des Holmgurtes entspricht. Die Quererstreckung erstreckt sich in einer Richtung orthogonal zur Längserstreckung und weist eine größere Abmessung auf als die Dicke. Dies geht einher mit der Erkenntnis, dass der Holmgurt im Wesentlichen als ein flächiges Element mit einer geringen Dicke ausgebildet ist. Die flächige Erstreckung des Holmgurtes wird demnach durch die Längserstreckung und durch die Quererstreckung gebildet.

Die Dicke des Holmgurtes verläuft in eine Richtung, die orthogonal zur zuvor beschriebenen Fläche und somit in eine orthogonale Richtung zur Längserstreckung sowie gleichzeitig in eine orthogonale Richtung zur Quererstreckung verläuft. Um den speziellen Belastungen des Holmgurtes gerecht zu werden, wird die Abmessung der Quererstreckung und/oder die Abmessung der Dicke entlang der Längserstreckung variiert. Dabei nimmt insbesondere die Abmessung der Dicke hin zum zweiten Ende und/oder zum ersten Ende hin ab. Dies wird insbesondere dadurch ermöglicht, dass das Dehnungsniveau zur Spitze des Rotorblattes abnimmt.

Der Holmgurt umfasst mindestens zwei Lagen eines ersten Faserverbundmaterials. Die Lagen sind im Wesentlichen als Schichten eines Materials zu verstehen, die eine flächige Geometrie mit einer geringen Dicke aufweisen. Eine Lage besteht dabei aus mindestens zwei flächig angeordneten Fasern und aus dem die Fasern umgebenden Matrixmaterial. Die Lagen des Faserverbundmaterials sind im Wesentlichen planparallel zur zuvor genannten flächigen Ausdehnung des Holmgurtes angeordnet. Ferner umfasst der Holmgurt mindestens eine Lage eines zweiten Faserverbundmaterials, wobei die Lagen des zweiten Faserverbundmaterials ebenfalls im Wesentlichen als Schichten eines Materials zu verstehen sind, die eine flächige Geometrie mit einer geringen Dicke aufweisen.

Ein Holmgurt mit derartigen Faserverbundlagen kann vorzugsweise vollständig starr sein und keine Biegung um irgendeine Achse zulassen. Ferner vorzugsweise ist ein derartiger Holmgurt bezüglich bestimmter Achsen in gewisser Weise elastisch. Beispielsweise kann der Holmgurt aufgrund der großen Abmessung seiner Längserstreckung bezüglich einer Achse parallel zur Quererstreckung elastisch sein. Eine möglichst minimale Elastizität ist vorzugsweise in Längsrichtung der Längserstreckung zu realisieren, d.h. bezüglich einer Achse parallel zur Längserstreckung.

Die Bestandteile des ersten Faserverbundmaterials sind dabei erfindungsgemäß verschieden von den Bestandteilen des zweiten Faserverbundmaterials. Faserverbundmaterialien der eingangs genannten Art weisen im Wesentlichen zwei Hauptbestandteile auf. Die Hauptbestandteile sind ein Matrixmaterial und Fasern, wobei die Hauptbestandteile derartige Wechselwirkungen miteinander aufweisen, dass das Faserverbundmaterial vorzugsweise höherwertige Eigenschaften aufweist als jede der beiden einzelnen, beteiligten Hauptbestandteile. Die Fasern sind dabei in das Matrixmaterial eingebettet. Dem Einsatz von unterschiedlichen Bestandteilen in den zwei Faserverbundmaterialien des Holmgurtes liegt die Erkenntnis zugrunde, dass der Einsatz mehrerer Materialien vorteilhaft hinsichtlich der zu erzielbaren Eigenschaften des Holmgurtes ist, da die spezifischen Charakteristika der Materialien, wie beispielsweise Steifigkeit, spezifisches Gewicht oder elektrische Leitfähigkeit gezielt genutzt werden können.

Das Matrixmaterial bildet die Matrix aus, die die Fasern in ihrer Position halten und Spannungen zwischen den Fasern übertragen und verteilen. Darüber hinaus dient die Matrix dem Schutz der Fasern vor äußeren mechanischen und chemischen Einflüssen. Die Fasern erhöhen die Festigkeit des Materials, die in Abhängigkeit des Faserverlaufs in der Matrix entweder richtungsabhängig (anisotrop) oder richtungsunabhängig (isotrop) ist. Die unterschiedlichen Bestandteile des ersten Faserverbundmaterials und des zweiten Faserverbundmaterials beziehen sich im Wesentlichen auf die Fasern und/oder das Matrixmaterial.

Mit anderen Fasern sind hier verschiedene bzw. unterschiedliche Fasern im Sinne von Faserarten bzw. Fasermaterialien gemeint. Die Fasern des ersten Faserverbundmaterials und/oder des zweiten Faserverbundmaterials umfassen unterschiedliche Faserarten oder bestehen aus diesen. Potenzielle Faserarten können organische Fasern, und/oder anorganische Fasern, und/oder Naturfasern sein. Anorganische Fasern sind beispielsweise Glasfasern, Basaltfasern, Borfasern, Keramikfasern oder Stahlfasern. Organische Fasern sind beispielsweise Aramidfasern, Kohlenstofffasern, Polyesterfasern und Polyethylenfasern (insbesondere High Performance Polyethylene (HPPE) Fasern, wie beispielsweise Dyneema-Fasern). Naturfasern sind beispielsweise Hanffasern, Flachsfasern oder Sisalfasern. Die Fasern des zweiten Faserverbundmaterials umfassen Kohlenstofffasern und die Fasern des ersten Faserverbundmaterials umfassen anorganische Fasern, nämlich nicht elektrisch leitfähige Fasern.

In einer bevorzugten Ausführungsvariante umfasst das erste und/oder das zweite Faserverbundmaterial jeweils ausschließlich eine einzelne Faserart. In einer weiteren bevorzugten Variante umfassen die Fasern des ersten Faserverbundmaterials und/oder des zweiten Faserverbundmaterials jeweils zwei Faserarten, beispielsweise organische Fasern und anorganische Fasern. In einer besonders bevorzugten Ausführungsvariante umfassen das erste Faserverbundmaterial und/oder das zweite Faserverbundmaterial jeweils mehr als zwei unterschiedliche Faserarten.

Es ist vorgesehen, dass die Fasern des ersten Faserverbundmaterials nicht elektrisch leitfähige Fasern, wie beispielsweise Glasfasern, umfassen oder sind, und die Fasern des zweiten Faserverbundmaterials Kohlenstofffasern umfassen oder sind.

Die Fasern des ersten und/oder des zweiten Faserverbundmaterials können innerhalb des Matrixmaterials auf unterschiedlichste Weise angeordnet sein. Die Fasern können als Gewebe, und/oder Gelege, und/oder Multiaxialgelege, und/oder Gesticke, und/oder Fließstoff, und/oder Matten, und/oder Geflechte, und/oder Faserbündel, vorzugsweise Rovings, innerhalb des Matrixmaterials angeordnet sein.

Diese Anordnung der Fasern bestimmt unter anderem den Herstellungsprozess, insbesondere die Wirtschaftlichkeit des Herstellungsprozesses, sowie die Anisotropie des Faserverbundmaterials. Je nach Anforderungen an den Holmgurt kann durch die Anordnung der Fasern eine starke Anisotropie oder auch eine starke Isotropie erreicht werden, so dass die Steifigkeit in Längsrichtung, in Querrichtung und auch in Richtung der Dicke durch die Ausrichtung der in den Faserverbundmaterialien enthaltenen Fasern beeinflusst werden kann. Anisotrope Eigenschaften des Holmgurts sind vorzugsweise zu realisieren, da es eine Aufgabe des Holmgurts ist die Aufnahme von Kräften in Längsrichtung zu gewährleisten. Zu diesem Zweck werden die Fasern vorzugsweise mit einer Ausrichtung in Längsrichtung in das Matrixmaterial eingebettet.

Erfindungsgemäß ist das zweite Faserverbundmaterial in einem Abschnitt angrenzend an das zweite Ende des Holmgurtes in Richtung der Dicke zwischen den mindestens zwei Lagen des ersten Faserverbundmaterials angeordnet. Die Lagen des ersten Faserverbundmaterials und die Lagen des zweiten Faserverbundmaterials sind demnach im Wesentlichen planparallel übereinander angeordnet. Der Holmgurt besteht aus mindestens drei Schichten, wobei zwei äußere Schichten und mindestens eine innere Schicht vorhanden sind. Eine Schicht besteht dabei aus einer oder mehrerer Lagen des Faserverbundmaterials. Die zwei äußeren Schichten bestehen dabei aus Lagen des ersten Faserverbundmaterials und, im Falle von insgesamt drei Schichten, die zwischen diesen äußeren Schichten angeordnete innere Schicht besteht aus Lagen des zweiten Faserverbundmaterials.

Die Dicke des Holmgurtes wird durch die planparallel, übereinander angeordneten Lagen des ersten Faserverbundmaterials und die planparallel, übereinander angeordneten Lagen des zweiten Faserverbundmaterials gebildet. Die Dicke des Holmgurtes ist daher im Wesentlichen linear zu der Anzahl der Lagen des ersten Faserverbundmaterials und zu der Anzahl der Lagen des zweiten Faserverbundmaterials. Durch die Anzahl der Lagen kann das Gewicht des Holmgurtes wesentlich beeinflusst werden, da die Dicke in Verbindung mit der flächigen Ausdehnung, bestimmt durch die Längserstreckung und Querstreckung, und das spezifische Gewicht der Faserverbundmaterialien das Gewicht des Holmgurtes bestimmt.

Die innere Schicht, welche aus dem zweiten Faserverbundmaterial besteht, ist erfindungsgemäß in einem Abschnitt angrenzend an das zweite Ende angeordnet, so dass die innere Schicht bzw. der Abschnitt aufweisend die innere Schicht von dem zweiten Ende im Wesentlichen in Längsrichtung beabstandet ist. Die Abmessung dieser Beabstandung kann vorzugsweise 2%, ferner vorzugsweise 5%, ferner vorzugsweise 7,5%, ferner vorzugsweise 10%, ferner vorzugsweise 12,5%, ferner vorzugsweise 15%, ferner vorzugsweise 17,5%, ferner vorzugsweise 20%, ferner vorzugsweise mehr als 20% der Abmessung der longitudinalen Holmgurterstreckung betragen. Dieser Abschnitt kann sich ferner bis zum ersten Ende des Holmgurtes erstrecken. In einer weiteren bevorzugten Variante ist dieser Abschnitt ebenfalls von dem ersten Ende des Holmgurtes beabstandet.

Erfindungsgemäß endet daher die mindestens eine Lage des zweiten Faserverbundmaterials vor dem zweiten Ende des Holmgurtes. Es ergibt sich demnach weiter, dass der zuvor genannte Abschnitt, aufweisend das zweite Faserverbundmaterial, stets von dem zweiten Ende beabstandet ist. Ferner ergibt sich, dass das zweite Ende im Wesentlichen durch Lagen des ersten Faserverbundmaterials gebildet wird. Es ist daher eine erfindungsgemäße Voraussetzung, dass am zweiten Ende des Holmgurtes mindestens eine Lage des ersten Faserverbundmaterials vorhanden ist.

Erfindungsgemäß reduziert sich die Anzahl der Lagen des ersten Faserverbundmaterials zum zweiten Ende hin. Diese Reduktion der Lagen des ersten Faserverbundmaterials zum zweiten Ende hin ist dahingehend vorteilhaft, dass durch die Anzahl der Lagen das Gewicht des Holmgurtes maßgeblich beeinflusst wird und eine derartige Lagenreduktion zu einer Gewichtsersparnis führen kann. Mit der Reduktion der Lagen und der damit verbundenen Gewichtsersparnis geht ferner eine Reduktion der Steifigkeit einher. Eine solche Reduktion der Anzahl der Lagen kann auch als Abschäftung oder Zurückschäftung bezeichnet werden.

Die Reduktion der Lagen des ersten Faserverbundmaterials erfolgt jedoch nur insofern , dass in dem oben genannten Bereich, enthaltend Lagen des ersten und des zweiten Faserverbundmaterials, zwei äußere Lagen, bestehend aus dem ersten Faserverbundmaterial, verbleiben, damit die Lage oder die Lagen des zweiten Faserverbundmaterials zwischen diesen zwei äußeren Lagen des ersten Faserverbundmaterials angeordnet sind. Im Bereich des zweiten Endes, an dem keine Lagen des zweiten Faserverbundmaterials angeordnet sind, kann die Anzahl der Lagen des ersten Faserverbundmaterials bis auf eins reduziert werden.

Eine Reduktion der Lagen des ersten Faserverbundmaterials zum zweiten Ende hin ist insbesondere vorteilhaft, da die notwendige Längssteifigkeit des Holmgurts zum zweiten Ende hin, aufgrund der sich reduzierenden Fliehkräfte zur Spitze des Rotorblattes hin, abnimmt und somit die erzielte Gewichtsersparnis mit keinen Nachteilen hinsichtlich der Steifigkeitsanforderungen einher geht.

In einer weiteren bevorzugten Ausführungsform des Rotorblatts weist der Holmgurt mindestens zwei Lagen des zweiten Faserverbundmaterials auf, wobei die Anzahl der Lagen des zweiten Faserverbundmaterials sich zum zweiten Ende hin reduziert. Diese Ausführungsvariante berücksichtigt den Umstand, dass auch die Lagen des zweiten Faserverbundmaterials das Gewicht des Holmgurtes beeinflussen und somit in Abschnitten des Holmgurtes mit geringeren Festigkeitsanforderungen reduziert werden können.

Eine Reduktion der Lagen des zweiten Faserverbundmaterials zum zweiten Ende hin ist insbesondere vorteilhaft, da die notwendige Längssteifigkeit des Holmgurts zum zweiten Ende hin, aufgrund der sich reduzierenden Fliehkräfte zur Spitze des Rotorblattes hin, abnimmt. Auf diese Weise kann eine Gewichtsersparnis erzielt werden. Gleichzeitig wird die Reduktion der Lagen des zweiten Faserverbundmaterials und/oder die Reduktion der Lagen des ersten Faserverbundmaterials zum zweiten Ende hin vorzugsweise derart aufeinander und/oder auf die an der jeweiligen Stelle des Holmgurts herrschenden Anforderungen abgestimmt, dass ungünstige durch die Abschäftung verursachte Steifigkeitssprünge im Holmgurt reduziert oder vermieden werden. Dies kann insbesondere dadurch vermieden oder reduziert werden, dass bei die Reduktion der Lagen des ersten und zweiten Faserverbundmaterials nicht exakt an den gleichen Stellen erfolgt, sondern versetzt.

Eine weitere bevorzugte Fortbildung des erfindungsgemäßen Rotorblatts sieht vor, dass dieser mindestens drei oder mehr Lagen des ersten Faserverbundmaterials und/oder mindestens drei oder mehr Lagen des zweiten Faserverbundmaterials umfasst. Diese Ausführungsvariante wird in einem Großteil der Anwendung für Holmgurte angewandt, da in der Regel eine Vielzahl an Faserverbundmateriallagen notwendig ist, um die gewünschten Steifigkeitseigenschaften eines Holmgurtes zu erreichen.

In einer besonders bevorzugten Variante des erfindungsgemäßen Rotorblatts ist vorgesehen, dass die mindestens eine Lage des zweiten Faserverbundmaterials zwei äußere, sich gegenüberliegende Seiten aufweist, die jeweils durch eine flächige Ausdehnung der Lagen in Längs- und Quererstreckung gebildet werden, wobei auf den beiden Seiten der mindestens einen Lage des zweiten Faserverbundmaterials die gleiche Anzahl an Lagen des ersten Faserverbundmaterials angeordnet ist. Die zwei äußeren Schichten, bestehend aus Lagen des ersten Faserverbundmaterials, weisen demnach jeweils die gleiche Anzahl an Lagen des ersten Faserverbundmaterials auf.

Ferner ist vorgesehen, dass die Fasern des zweiten Faserverbundmaterials Kohlenstofffasern umfassen oder sind. Kohlenstofffaserverstärkte Faserverbundmaterialien haben den besonderen Vorteil einer sehr hohen Steifigkeit, wobei diese gleichzeitig ein äußerst geringes spezifisches Gewicht aufweisen. Die Steifigkeit des kohlenstofffaserverstärkten Faserverbundmaterials ist insbesondere stark anisotrop einstellbar und kann somit gezielt die Steifigkeit in Längsrichtung des Holmgurtes erhöhen. Die Steifigkeit in Längsrichtung wird ferner vorteilhaft beeinflusst, wenn Endlosfasern eingesetzt werden.

Die Kohlenstofffasern können dabei in unterschiedlichen Matrixmaterialien eingebettet sein, wobei bei der Verwendung von faserverstärkten Kunststoffen insbesondere die Anwendung von thermoplastischen oder duroplastischen Matrixmaterialien vorteilhaft ist. Kohlenstofffaserverstärkter Kunststoff zeichnet sich ferner durch gute Dämpfungseigenschaften, eine hohe Schlagzähigkeit in Verbindung mit einer gezielt einstellbaren thermischer Ausdehnung aus. Ferner zeichnet sich kohlenstofffaserverstärkter Kunststoff durch eine im Vergleich zum glasfaserverstärkten Kunststoff stark erhöhte elektrische und thermische Leitfähigkeit aus.

Der Erfindung liegt ferner die Erkenntnis zugrunde, dass das Blitzeinschlagrisiko durch elektrisch leitfähige Materialien im bzw. am Rotorblatt erhöht wird. Die hinsichtlich der Steifigkeit und des spezifischen Gewichts besondere Vorteilhaftigkeit des kohlenstofffaserverstärkten Kunststoffs wird durch diese Erkenntnis eingeschränkt, da durch die zuvor erläuterte hohe elektrische Leitfähigkeit des kohlenstofffaserverstärkten Kunststoffs das Blitzeinschlagrisiko durch dessen Verwendung erhöht wird. Erfindungsgemäß wird das erhöhte Blitzeinschlagrisiko bei der Verwendung von kohlenstofffaserverstärkten Kunststoff im Holmgurt reduziert, da der kohlenstofffaserverstärkte Kunststoff von einem nicht elektrisch leitfähigen Material umgeben ist. Dabei kann ferner das Risiko eines Überschlags des Blitzes im Verlauf der inneren Ableitung zum Rotorblattflansch minimiert werden.

Auf die zuvor beschriebene Erkenntnis in Bezug auf elektrisch leitfähige Materialien im bzw. am Rotorblatt und des damit einhergehenden Blitzeinschlagrisikos geht ferner die Erkenntnis der Vorteilhaftigkeit einer Zurückschäftung des elektrisch leitfähigen Materials zurück. Daher ist die zuvor beschriebene Beabstandung des zweiten Faserverbundmaterials vom zweiten Ende des Holmgurts eine weitere Lösung zur Reduktion des Blitzeinschlagrisikos.

Es ist vorgesehen, dass die Fasern des ersten Faserverbundmaterials anorganische Fasern, nämlich nicht elektrisch leitfähige Fasern, wie beispielsweise Glasfasern, umfassen oder sind. Anorganische Fasern bieten in der Regel den Vorteil, dass diese trotz ihrer guten Materialeigenschaften lediglich geringe Materialkosten verursachen und die Verarbeitung ebenfalls kostengünstig durchzuführen ist. Dies gilt insbesondere im direkten Vergleich zu kohlenstofffaserverstärkten Kunststoffen. Bevorzugte anorganische Fasern sind neben Glasfasern unter anderem Basaltfasern, Borfasern oder Keramikfasern . Glasfasern werden besonders bevorzugt als Fasern in faserverstärkten Kunstoffen eingesetzt, wobei hier überwiegend duroplastische oder thermoplastische Matrixmaterialien zum Einsatz kommen.

Der Erfindung liegt ferner die Erkenntnis zugrunde, dass in Holmgurten der Einsatz von elektrisch nicht leitfähigen Materialien einige Vorteile bieten. Diese Vorteile zeigen sich beispielsweise dadurch, dass das Blitzeinschlagrisiko bei der Verwendung von nicht leitfähigen Holmgurtmaterialien reduziert wird. Der Erfindung liegt ferner die Erkenntnis zugrunde, dass bei der Verwendung von zwei Holmgurtmaterialien die Möglichkeit besteht, ein elektrisch leitfähiges und ein nicht oder gering elektrisch leitfähiges Material zu verwenden. Im Falle, dass das nicht oder kaum elektrisch leitfähige Material das elektrisch leitfähige Material im Wesentlichen umschließt, besteht die Möglichkeit das leitfähige Material vollständig oder überwiegend zu isolieren und somit das Blitzeinschlagrisiko zu reduzieren.

In einer weiteren Ausführungsvariante des erfindungsgemäßen Rotorblatts ist vorgesehen, dass das Matrixmaterial des ersten Faserverbundmaterials und/oder des zweiten Faserverbundmaterials Kunststoff umfasst oder daraus besteht, und der Kunststoff vorzugsweise ein Thermoplast und/oder ein Duroplast umfasst oder daraus besteht, und/oder dass das Matrixmaterial des ersten Faserverbundmaterials und/oder des zweiten Faserverbundmaterials Zement umfasst oder daraus besteht, und/oder Beton umfasst oder daraus besteht, und/oder Keramik umfasst oder daraus besteht.

Eine Kunststoffmatrix aus einem thermoplastischen Matrixmaterial hat den Vorteil, dass sich der erzeugte Holmgurt noch umformen und/oder verschweißen lässt. Dies hat insbesondere seine Ursache darin, dass das thermoplastische Matrixmaterial mehrfach aufgeschmolzen werden kann. Dies kann vorteilhaft bei der Befestigung des Holmgurtes im Hohlraum des Rotorblattes sein. Holmgurte, die ein Duroplast als Matrixmaterial aufweisen oder aus diesem bestehen, zeichnen sich dagegen durch eine besonders hohe Festigkeit aus. Nachteilig ist bei einem duroplastischen Matrixmaterial, dass dieses nach dem Aushärten nur schwer weiterzuverarbeiten ist und ein abermaliges Aufschmelzen nicht möglich ist.

Der Einsatz von Zement, Beton, Metall, Keramik und/oder Kohlenstoff ermöglicht die Nutzung der spezifischen Vorteile der genannten Materialien die sich insbesondere, aber nicht ausschließlich, auf deren Steifigkeiten hinsichtlich Zug und/oder Druckkräfte, deren spezifisches Gewicht, deren elektrische und/oder thermische Leitfähigkeit und/oder deren Verarbeitbarkeit beziehen.

Bei dem erfindungsgemäßen Rotorblatt besteht die Möglichkeit, dass das erste Faserverbundmaterial ein anderes Matrixmaterial als das zweite Faserverbundmaterial aufweist. Beispielsweise besteht die Möglichkeit, dass das erste Faserverbundmaterial ein thermoplastisches Matrixmaterial umfasst, um die Vorteile dieses Materials hinsichtlich der Elastizität und Verarbeitbarkeit zu nutzen. Ferner besteht die Möglichkeit, dass das zweite Faserverbundmaterial ein duroplastisches Matrixmaterial umfasst, um die Möglichkeit einer hohen Festigkeit durch dieses Material zu nutzen. Matrizen aus Kunststoff und/oder Keramik bieten im vorliegenden Anwendungsfeld den besonderen Vorteil, dass es sich um elektrisch nicht bzw. gering leitfähige Materialien handelt, so dass das Blitzeinschlagrisiko reduziert werden kann, wenn diese Matrixmaterialien insbesondere für das erste Faserverbundmaterial eingesetzt werden.

In einer weiteren besonders bevorzugten Ausführungsvariante des erfindungsgemäßen Rotorblatts ist vorgesehen, dass die Lagen des ersten Faserverbundmaterials und des zweiten Faserverbundmaterials zwischen zwei äußeren Lagen des ersten Faserverbundmaterials angeordnet sind. In dieser Ausführungsvariante ist vorgesehen, dass zwischen den äußeren Faserverbundmateriallagen des ersten Faserverbundmaterials, vermischt übereinander Lagen des ersten Faserverbundmaterials und des zweiten Faserverbundmaterials angeordnet sein können.

In dieser Ausführungsvariante sind demnach mehr als die zwei Schichten, bestehend aus einer oder mehrerer Lagen des ersten Faserverbundmaterials, und die eine Schicht, bestehend aus einer oder mehrerer Lagen des zweiten Faserverbundmaterials, angeordnet. Zwischen den zwei äußeren Schichten, bestehend aus Lagen des ersten Faserverbundmaterials, können eine Vielzahl an Schichten, bestehend aus Lagen des ersten Faserverbundmaterials und Lagen des zweiten Faserverbundmaterials, angeordnet sein. Hier sind die zwei unterschiedlichen Materialien demnach schichtweise vermischt. Vorzugsweise weisen das erste und das zweite Faserverbundmaterial die gleichen Matrixmaterialien auf.

Eine derartige Anordnung ist dahingehend vorteilhaft, dass Steifigkeitssprünge im Holmgurt reduziert werden können und somit keine oder schwächere Spannungsspitzen vorhanden sind. Das Vorsehen von zwei äußeren Lagen des ersten Verbundmaterials ist dahingehend notwendig, dass diese Lagen spezifische technische Aufgaben übernehmen. Insbesondere ist hier an die notwendige Bedingung zu verweisen, dass der Holmgurt in das Rotorblatt eingefügt werden muss und somit das erste Faserverbundmaterial mit einem weiteren Material vorzugsweise stoffschlüssig zu verbinden ist. Darüber hinaus ist der bereits erwähnte Vorteil hier umgesetzt, dass das erste Faserverbundmaterial aus einem nichtleitfähigen Material besteht, das das zweite Faserverbundmaterial isoliert und somit das Blitzeinschlagrisiko reduziert werden kann.

Eine bevorzugte Ausführungsvariante sieht ferner vor, dass die Fasern des ersten Faserverbundmaterials und/oder des zweiten Faserverbundmaterials im Wesentlichen parallel zur Richtung der Längserstreckung verlaufen. Ein derartiger Faserverlauf resultiert darin, dass insbesondere die Zugsteifigkeit des Holmgurts in Längsrichtung maximiert wird.

Für weitere Vorteile, Ausführungsvarianten und Ausführungsdetails des erfindungsgemäßen Rotorblatts mit Holmgurt und seinen Fortbildungen wird auch auf die unten
folgende Beschreibung zu den Merkmalen des zugehörigen Herstellungsverfahrens verwiesen.

Bevorzugt weist das Rotorblatt einer Windenergieanlage mit einem zuvor beschriebenen Holmgurt ferner vorzugsweise eine elektrisch leitfähige Folienlage und eine Blitzfangeinrichtung eines Blitzschutzsystems auf, wobei die elektrisch leitfähige Folienlage mit der Blitzfangeinrichtung über eine elektrisch leitfähige Verbindung verbunden ist.

Das Vorsehen eines hier beschriebenen Holmgurts in einem Rotorblatt einer Windenergieanlage ist hinsichtlich unterschiedlicher Belange vorteilhaft. Insbesondere zeichnet sich ein derartiges Rotorblatt durch ein geringeres Gewicht und gegebenenfalls durch eine höhere Steifigkeit aus. Ferner besteht bei der Wahl der entsprechenden Faserverbundmaterialien die Möglichkeit der Reduktion des Blitzschlagrisikos. Dieser ist realisiert, indem für ein erstes Faserverbundmaterial ein Material genutzt wird, das eine geringe elektrische Leitfähigkeit aufweist.

Das Vorsehen einer mit der Blitzfangeinrichtung, beispielsweise einem Rezeptor, elektrisch leitfähig verbunden Folienlage, die ebenfalls elektrisch leitfähig ist, hat den Vorteil, dass dadurch die Auffangfläche der Blitzfangeinrichtung deutlich vergrößert werden kann und daher das Risiko für Blitzeinschläge in diesem Bereich beispielsweise in den Gurt des Rotorblattes und/oder dadurch verursachte Schäden am Rotorblatt deutlich reduzieren.

In einer weiteren bevorzugten Ausgestaltung des Rotorblatts ist vorgesehen, dass die Folienlage eine Erstreckung in Richtung einer Längserstreckung des Rotorblatts aufweist, die vorzugsweise maximal 1/5, insbesondere maximal 1/10 oder maximal 1/20 oder maximal 1/50 der Längserstreckung des Rotorblatts beträgt. Vorzugsweise erstreckt sich die Folienlage somit nicht über die gesamte Längserstreckung des Rotorblatts, auch nicht über einen Großteil der Längserstreckung des Rotorblatts, sondern lediglich über einen vergleichsweise kleinen Bereich.

Ferner ist bevorzugt, dass die Folienlage einen Bereich in Richtung einer Längserstreckung des Rotorblatts abdeckt, in dem die mindestens eine Lage des zweiten Faserverbundmaterials des Holmgurts endet. Insbesondere bei einer Anordnung, bei der die Folienlage den Bereich abdeckt, in dem die mindestens eine Lage des zweiten Faserverbundmaterials endet, kann das Risiko für Blitzeinschläge, beispielsweise in den Holmgurt, in diesem Bereich weiter reduziert werden.

Eine weitere bevorzugte Ausgestaltung sieht vor, dass die Folienlage in einer äußeren Hälfte einer quer Längserstreckung des Rotorblatts gemessenen Dicke einer Rotorblattwandung angeordnet ist, insbesondere in einem äußeren Drittel oder einem äußeren Viertel oder einem äußeren Zehntel oder einem äußeren Fünfzigstel oder einem äußeren Hundertstel. Eine Anordnung der Folienlage möglichst weit außen (in einer Richtung quer zur Längserstreckung des Rotorblatt) an der Rotorblattoberfläche ist bevorzugt für eine besonders effiziente Wirkung der Folienlage.

Es kann vorzugsweise vorgesehen sein, dass die Folienlage auf einer oder mehreren Lagen Faserverbundmaterial angeordnet ist, die vorzugsweise keine für die Auslegung des Rotorblatts relevanten Trageigenschaften aufweist bzw. aufweisen. Diese Ausgestaltung ist insbesondere bevorzugt, um im Schadensfall, beispielsweise eine Beschädigung von Faserverbundmaterial durch einen Lichtbogen eines Blitzes, keine für die Tragfähigkeit des Rotorblattes relevanten Lagen Faserverbundmaterial zu beeinträchtigen, sondern möglichst nur die zusätzlich vorgesehen Lagen Faserverbundmaterial, auf denen die Folienlage angeordnet ist.

Weiter ist bevorzugt, dass die Folienlage angeordnet und ausgebildet ist, einer erwarteten Blitzstrombelastung zu widerstehen. Die erwartete Blitzstrombelastung kann insbesondere eine erwartete mittlere Blitzstrombelastung sein. Sollten die Folienlage und/oder die eine oder mehreren Lagen Faserverbundmaterial, auf der die Folienlage angeordnet ist, einer Blitzstrombelastung, insbesondere einer die erwartete Blitzstrombelastung übertreffenden Blitzstrombelastung nicht oder nicht vollständig widerstehen, kann eine Reparatur und/oder ein Austausch der Folienlage und/oder der eine, oder mehreren Lagen Faserverbundmaterial, auf der die Folienlage angeordnet ist, vorgesehen sein.

Eine weitere bevorzugte Ausgestaltung sieht vor, dass die Folienlage mehrere Ausnehmungen und/oder Maschen aufweist, die vorzugsweise in einem regelmäßigen Muster angeordnet sind. Beispielsweise können die Ausnehmungen und/oder Maschen rautenförmig und/oder rechteckförmig und/oder quadratisch und/oder rund und/oder oval und/oder vieleckig ausgebildet sein. Die Stege zwischen den Ausnehmungen und/oder Maschen weisen vorzugsweise eine Dicke von 0,3 mm und eine Breite von 0,5 mm auf.

Die Ausnehmungen und/oder Maschen weisen vorzugsweise eine Länge von 3,5 mm und eine Breite von 2,5 mm auf.

Die Folienlage besteht vorzugsweise aus Aluminium oder Kupfer oder weist Legierungen von Aluminium oder Kupfer auf.

Gemäß einem weiteren Aspekt der Erfindung wird die eingangs genannte Aufgabe gelöst durch eine Windenergieanlage nach Anspruch 9.

Gemäß einem weiteren Aspekt der Erfindung wird die eingangs genannte Aufgabe gelöst durch ein Verfahren zur Herstellung eines Rotorblatts nach Anspruch 10.

Das Verlegen der Lagen des ersten und/oder zweiten Faserverbundmaterials erfolgt derart, dass die flächigen Seiten dieser Lagen jeweils überwiegend planparallel, übereinander angeordnet werden. Das Verlegen erfolgt ferner derart, dass die Lagen des zweiten Faserverbundmaterials zwischen den Lagen des ersten Faserverbundmaterials verlegt werden. Ferner vorzugsweise sind auf den zwei äußeren, sich gegenüberliegenden Lagen des zweiten Faserverbundmaterials jeweils gleich viele Lagen des ersten Faserverbundmaterials angeordnet.

Am zweiten Ende des Holmgurtes werden die Lagen des ersten Faserverbundmaterials und die Lagen des zweiten Faserverbundmaterials derart verlegt, so dass die Lagen des ersten Faserverbundmaterials bis zum zweiten Ende hinreichen und die Lagen des zweiten Faserverbundmaterials bereits vor dem zweiten Ende enden. Das zweite Ende wird daher vorzugsweise ausschließlich durch Lagen des ersten Faserverbundmaterials hergestellt. Das Verfahren zur Herstellung des erfindungsgemäßen Rotorblatts erfolgt ferner durch die Nutzung eines ersten Faserverbundmaterials und eines zweiten Faserverbundmaterials, wobei das erste Faserverbundmaterial ein anderes Material ist als das zweite Faserverbundmaterial. Diese Andersartigkeit zeigt sich insbesondere bei den verwendeten Fasern und/oder dem verwendeten Matrixmaterial. Für das erste Faserverbundmaterial wird ein Material verwendet, das nicht elektrisch leitfähig ist. Ferner vorzugsweise wird für das zweite Faserverbundmaterial ein Material genutzt, das insbesondere eine sehr hohe Steifigkeit aufweist.

Das Verlegen der Lagen der Faserverbundmaterialien kann auf unterschiedliche Weise erfolgen, beispielsweise wird die Faserwickeltechnik, die Autoklavpresstechnik oder das Handlaminierverfahren angewendet. In Abhängigkeit der gewählten Fasern und/oder des gewählten Matrixmaterials können im Anschluss an den zuvor dargelegten Herstellungsprozess noch weitere Herstellungsschritte folgen. Diese Schritte können beispielsweise das Aushärten eines Matrixmaterials und/oder die Verdichtung des Faserverbundmaterials umfassen.

Das erfindungsgemäße Herstellungsverfahren sieht vor, dass die Anzahl der Lagen des ersten Faserverbundmaterials zum zweiten Ende hin reduziert werden, wobei die Reduktion der Lagen entweder kontinuierlich oder in definierten Abständen erfolgt. Dabei wird im Wesentlichen die Anzahl der übereinander angeordneten Lagen des ersten Faserverbundmaterials reduziert, so dass zwei Schichten, bestehend aus Lagen des ersten Faserverbundmaterials, angeordnet an den äußersten Flächen des zweiten Faserverbundmaterials, zum zweiten Ende hin eine in Richtung der Dicke geringer werdende Abmessung aufweist.

Durch diesen Herstellungsschritt wird die Dicke des Holmgurtes entlang der Längserstreckung reduziert. Durch die sehr geringe Dicke der einzelnen Lagen kann im Allgemeinen ein sehr homogener Übergang der einzelnen Lagen gewährleistet werden, so dass der Holmgurt eine stetige Geometrie aufweisen kann.

Eine bevorzugte Ausführungsform des Herstellungsverfahrens sieht vor, dass mindestens zwei Lagen des zweiten Faserverbundmaterials derart verlegt werden, dass sich die Anzahl der Lagen des zweiten Faserverbundmaterials zum zweiten Ende hin reduziert. Auch hier wird aufgrund der reduzierten Lagenanzahl des zweiten Faserverbundmaterials auf die spezifischen Belastungssituationen entlang der Längserstreckung des Holmgurts eingegangen. Bei dem Verlegen der Lagen des zweiten Faserverbundmaterials ist zu beachten, dass die Lagen des zweiten Faserverbundmaterials nicht bis zum zweiten Ende hin verlegt werden, sondern das Verlegen bereits vor dem zweiten Ende beendet wird. Durch diese Art des Verlegens wird sichergestellt, dass das zweite Faserverbundmaterial nicht bis zum zweiten Ende reicht, und somit das zweite Ende im Wesentlichen ausschließlich durch die Lagen des ersten Faserverbundmaterials gebildet wird.

Das Verfahren zur Herstellung eines zuvor beschriebenen Rotorblatts umfasst Einbringen eines zuvor beschriebenen Holmgurts; und ferner vorzugsweise Einbringen einer elektrisch leitfähigen Folienlage und ferner vorzugsweise Verbinden der Folienlage mit einer Blitzfangeinrichtung eines Blitzschutzsystems über eine elektrisch leitfähige Verbindung. Zu den Vorteilen, Ausführungsvarianten und Ausführungsdetails des Herstellungsverfahrens für ein Rotorblatt wird auch auf die vorangegangene Beschreibung zu den entsprechenden Merkmalen der übrigen Aspekte verwiesen.

Bevorzugte Ausführungsformen der Erfindung werden beispielhaft anhand der beiliegenden Figuren erläutert. Es zeigen:
- Figur 1:: eine schematische Darstellung einer Windenergieanlage;
- Figur 2:: eine schematische Querschnittsansicht in Richtung einer Längs- und Quererstreckung eines Holmgurts;
- Figur 3:: eine schematische Querschnittsansicht in Richtung einer Längserstreckung und der Dicke eines Holmgurts;
- Figur 4:: eine schematische Querschnittsansicht in Richtung einer Quererstreckung und einer Dicke eines Holmgurts;
- Figur 5:: eine schematische Querschnittsansicht in Richtung einer Quererstreckung und einer Dicke eines Holmgurts im Bereich der Zurückschäftung;
- Figur 6:: eine schematische Darstellung eines erfindungsgemäßen Rotorblatts; und
- Figur 7:: einen vergrößerten Ausschnitt aus einer schematischen Darstellung einer elektrisch leitfähigen Folienlage eines Rotorblatts gemäß Figur 6.

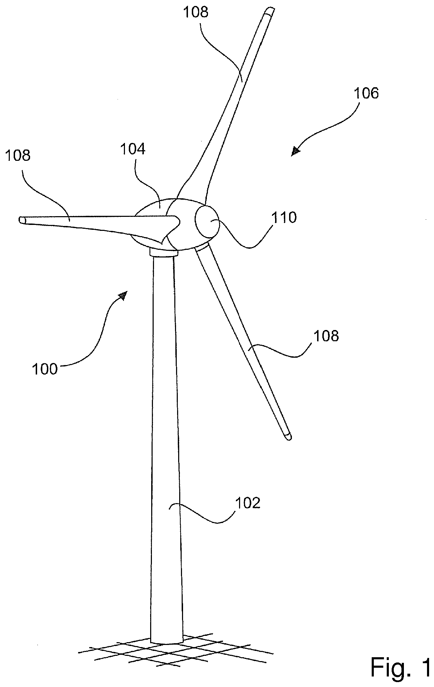

Figur 1 zeigt eine schematische Darstellung einer Windenergieanlage. Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Holmgurte 200 werden insbesondere für die Längsversteifung der Rotorblätter 108 eingesetzt. Zu diesem Zweck wird mindestens ein Holmgurt 200, vorzugsweise zwei Holmgurte 200, im Inneren des Rotorblattes 108 angeordnet und bevorzugt an einer zum Inneren des Rotorblattes 108 gewandten Seite befestigt.

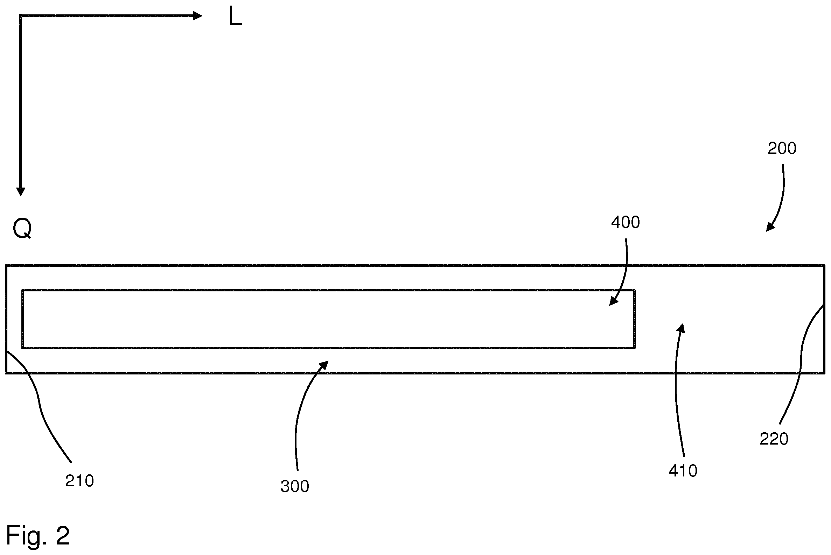

Figur 2 zeigt eine schematische Querschnittsansicht in Richtung einer Längserstreckung L und Quererstreckung Q eines Holmgurts 200. Der Holmgurt erstreckt sich longitudinal entlang seiner Längserstreckung L von einem ersten Ende 210 zu einem zweiten Ende 220. Das erste Ende 210 repräsentiert das Ende des Holmgurtes 200, das im Bereich einer Rotorblattwurzel angeordnet ist. Das zweite Ende 220 repräsentiert hingegen das Ende der Holmgurtes 200, das im Bereich einer Rotorblattspitze angeordnet ist. Die Abmessung der Quererstreckung Q kann entlang der

Längserstreckung L hin zum zweiten Ende 220 abschnittsweise abnehmen. Die Reduktion der Abmessung der Querstreckung Q kann alternativ vorzugsweise auch kontinuierlich erfolgen.

Der Holmgurt 200 ist im Wesentlichen aus Faserverbundmaterialien hergestellt, die in Form von sogenannten Lagen verarbeitet werden und in dieser Form auch im hergestellten Holmgurt 200 vorliegen. Eine Lage umfasst im Wesentlichen Fasern und ein Matrixmaterial, wobei eine Lage insbesondere als Schicht ausgebildet ist. Das heißt, dass eine Lage eine flächige Geometrie mit einer geringen Dicke aufweist. Die flächige Geometrie der Lagen ist insbesondere durch eine Fläche in Richtung der Längserstreckung L und der Quererstreckung Q ausgebildet.

Daher sind in der Figur 2, Figur 3, Figur4 und Figur 5 die Lage bzw. die Lagen eines ersten Faserverbundmaterials 300 und die Lage bzw. die Lagen eines zweiten Faserverbundmaterials 400 abgebildet. Die Lagen des ersten Faserverbundmaterials 300 umfassen oder sind vorzugsweise Glasfasern und die Lagen des zweiten Faserverbundmaterials 400 umfassen oder sind Kohlenstofffasern.

In der Figur 2 sind im Wesentlichen eine Lage des ersten Faserverbundmaterials 300 und eine Lage des zweiten Faserverbundmaterials abgebildet. Die Lagen des ersten Faserverbundmaterials 300 umschließen überwiegend die Lagen des zweiten Faserverbundmaterials 400 in Richtung der Längserstreckung L und in Richtung der Quererstreckung Q.

Insbesondere weist der Holmgurt 200 eine Zurückschäftung 410 der Lagen des zweiten Faserverbundmaterials 400 auf. Diese Zurückschäftung 410 zeigt sich insbesondere dadurch, dass die Lagen des zweiten Faserverbundmaterials 400 vom zweiten Ende 220 des Holmgurtes 200 beabstandet sind. Diese Beabstandung reduziert das Risiko eines Blitzeinschlages für den Fall, dass das erste Faserverbundmaterial eine geringe oder keine elektrische Leitfähigkeit und das zweite Faserverbundmaterial eine, im Vergleich zum ersten Faserverbundmaterial, hohe elektrische Leitfähigkeit aufweist. Ferner wird durch eine derartige Isolierung das Risiko eines Überschlags im Verlauf der inneren Ableitung zum Rotorblattflansch reduziert.

Die schematische Darstellung des Holmgurtes 200 in Figur 2 zeigt eine Quererstreckung Q der Lagen des ersten Faserverbundmaterials 300 und der Lagen des zweiten Faserverbundmaterials 400.

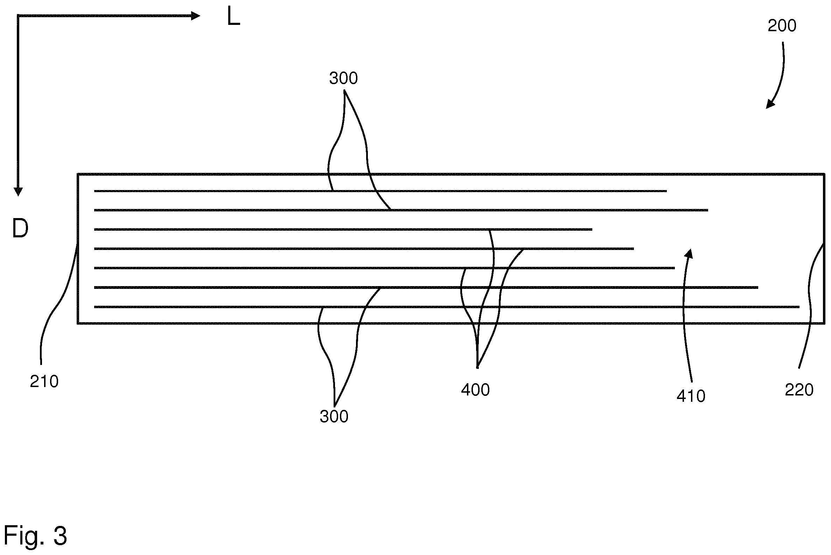

Figur 3 zeigt eine schematische Querschnittsansicht in Richtung einer Längserstreckung L und einer Dicke D eines Holmgurts 200. In dieser Ansicht sind insbesondere die schematisch dargestellten Lagen und deren Anzahl abgebildet. Die Lagen sind in einer Perspektive orthogonal zu ihrer flächigen Ausdehnung und orthogonal zur ihrer Längserstreckung abgebildet. Die Dicke D des Holmgurtes wird bestimmt durch die Anzahl der übereinander angeordneten Lagen des ersten Faserverbundmaterials 300 und durch die Anzahl der Lagen des zweiten Faserverbundmaterials 400. Der Bereich der Zurückschäftung 410 der Lagen des zweiten Faserverbundmaterials 400 ist in dieser Perspektive ebenfalls dargestellt.

Ferner ist die longitudinale Erstreckung der einzelnen Lagen des ersten Faserverbundmaterials 300 und die longitudinale Erstreckung der einzelnen Lagen des zweiten Faserverbundmaterials 400 abgebildet, wobei die Abmessungen deren jeweiliger longitudinaler Erstreckung nicht gleich ist. Durch die Zurückschäftung der Lagen des zweiten Faserverbundmaterials 400 entstehen bei der Wahl eines steiferen Materials für das zweite Faserverbundmaterial als für das erste Faserverbundmaterial Steifigkeitssprünge. Durch die Reduktion der Lagen des zweiten Faserverbundmaterials 400 an einer Stelle entlang der Längserstreckung L können die Lagen des ersten Faserverbundmaterials 300 in Summe eine höhere Steifigkeit aufweisen als die Lagen des zweiten Faserverbundmaterials 400, so dass die Steifigkeitssprünge weitestgehend minimiert werden können.

Ferner kann durch eine derartige Reduktion der Lagen des zweiten Faserverbundmaterials 400 auch die Anzahl der Lagen des ersten Faserverbundmaterials 300 zum zweiten Ende 220 hin reduziert werden. Dadurch wiederum kann, bei einem sich reduzierenden Dehnungsniveau, der Holmgurt 200 zum zweiten Ende 220 hin mit insgesamt weniger übereinander angeordneten Lagen hergestellt werden. Eine reduzierte Anzahl der übereinander angeordneten Lagen resultiert in einer kompakteren Bauweise, geringeren Materialkosten und einer beschleunigten Herstellungszeit sowie letztlich in einem geringeren Gewicht des Holmgurtes 200.

Darüber hinaus ist dargestellt, dass die Lagen des zweiten Faserverbundmaterials 400 in Richtung der Dicke zwischen Lagen des ersten Faserverbundmaterials 300 angeordnet sind. Ferner ist in diesem speziellen Ausführungsbeispiel abgebildet, dass die Lagen des zweiten Faserverbundmaterials 400 zwei äußere, sich gegenüberliegende Seiten aufweisen, die jeweils durch eine flächige Ausdehnung der Lagen in Längserstreckung L und Quererstreckung Q gebildet werden, wobei auf den beiden äußeren Seiten der Lagen des zweiten Faserverbundmaterials 400 die gleiche Anzahl an Lagen des ersten Faserverbundmaterials 300 angeordnet ist. Für die Figur 3 bedeutet dies, dass in vertikaler Richtung, über und unter der drei Lagen des zweiten Faserverbundmaterials 400 vorzugsweise jeweils die gleiche Anzahl an Lagen des ersten Faserverbundmaterials 300 angeordnet ist.

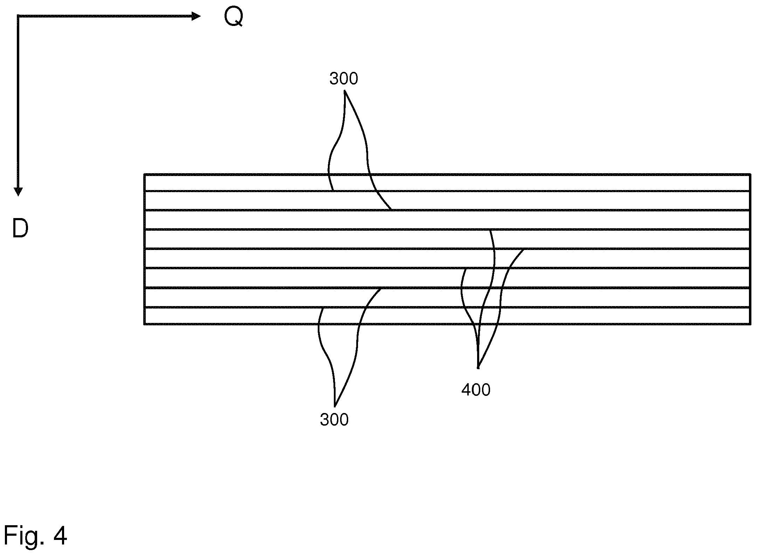

Figur 4 zeigt eine schematische Querschnittsansicht in Richtung einer Quererstreckung Q und einer Dicke D eines Holmgurts 200. Der gezeigte Querschnitt ist insbesondere aus einem Bereich entlang der Längserstreckung L in dem die Lagen des ersten Faserverbundmaterials 300 und Lagen des zweiten Faserverbundmaterials 400, analog zur Beschreibung der Figur 3, nicht reduziert sind. Daher sind drei Lagen des zweiten Faserverbundmaterials 400 im Inneren und an deren flächigen, äußeren Seiten sind jeweils zwei Lagen des ersten Faserverbundmaterials angeordnet. Die Lagen des ersten Faserverbundmaterials 300 und der Lagen des zweiten Faserverbundmaterials 400 erstrecken sich ferner vorzugsweise vollständig entlang der Quererstreckung Q.

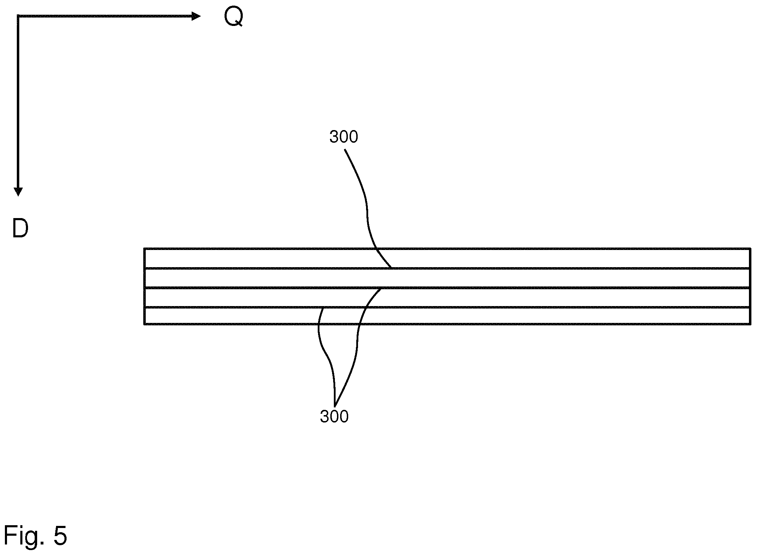

Figur 5 zeigt eine schematische Querschnittsansicht in Richtung einer Quererstreckung und einer Dicke eines Holmgurts. Der gezeigte Querschnitt ist insbesondere aus einem Bereich der Zurückschäftung 410 entlang der Längserstreckung L in dem die Lagen des ersten Faserverbundmaterials 300 und Lagen des zweiten Faserverbundmaterials 400, analog zur Beschreibung der Figur 3, reduziert sind, da hier lediglich Lagen des ersten Faserverbundmaterials 300 abgebildet sind. Es ist ferner ein Bereich der Zurückschäftung 410 abgebildet, der, angrenzend an das zweite Ende 220 und nicht aufweisend Lagen des zweiten Faserverbundmaterials 400, im Wesentlichen aus Lagen des ersten Faserverbundmaterials 300 besteht oder diese umfasst.

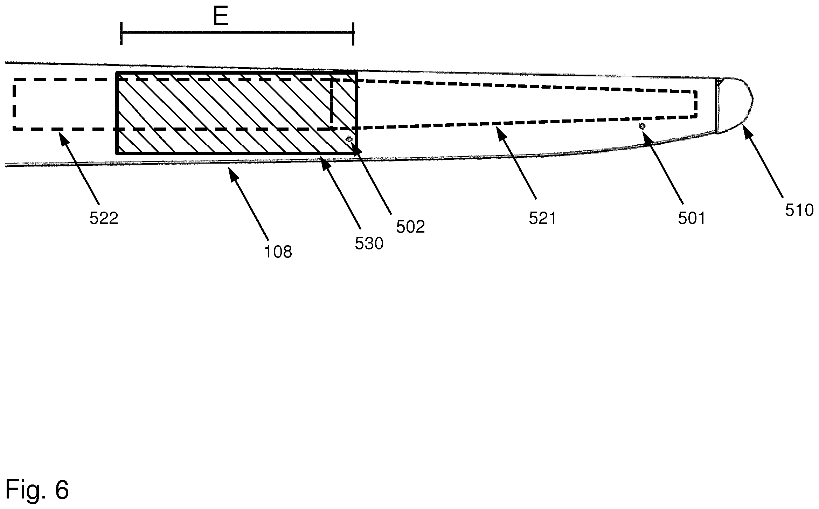

Figur 6 zeigt eine schematische Darstellung eines erfindungsgemäßen Rotorblatts 108 mit einer Rotorblattspitze 510 und zwei Blitzfangeinrichtungen in Form eines ersten und zweiten Rezeptors 501, 502 auf, die Teil eines nicht näher dargestellten Blitzschutzsystems sind. Mit dem zweiten Rezeptor 502 elektrisch leitfähig verbunden ist eine elektrisch leitfähige Folienlage 530. Diese erstreckt sich nicht über die gesamte Längserstreckung des Rotorblatts, sonder weist eine Erstreckung E in Richtung der Längserstreckung des Rotorblatts von wenigen Metern, vorzugsweise etwa 1-5m auf. Insbesondere deckt die Folienlage 530 einen Bereich in Richtung einer Längserstreckung des Rotorblatts ab, in dem die mindestens eine Lage des zweiten Faserverbundmaterials des Holmgurts endet. Dieser Bereich ist in Figur 6 am Übergang vom Holmgurt mit erstem und zweitem Faserverbundmaterial 522 zum Holmgurt mit nur dem ersten Faserverbundmaterial 521 zu erkennen. Ferner vorzugsweise ist die Folienlage 530 in Richtung quer zur Längserstreckung des Rotorblatts 108 möglichst weit außen angeordnet.

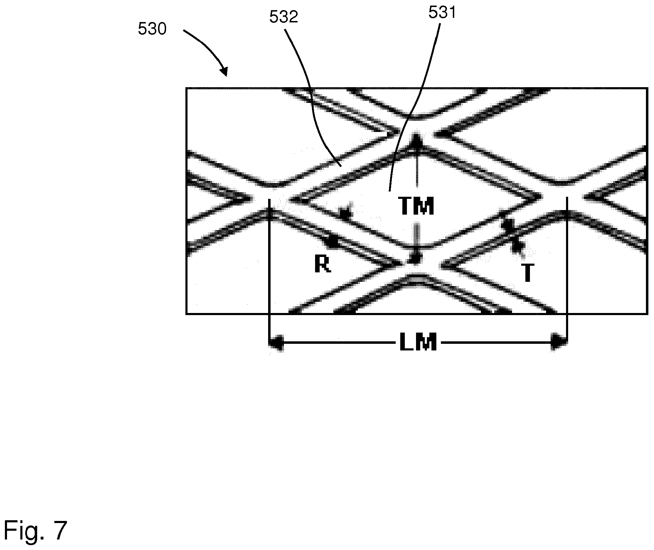

Figur 7 zeigt einen vergrößerten Ausschnitt aus einer schematischen Darstellung einer elektrisch leitfähigen Folienlage 530 eines Rotorblatts gemäß Figur 6. Die Folienlage 530 weist rautenförmige Maschen 531 auf, die durch Stege 532 getrennt sind. Die Stege 532 zwischen den Maschen 531 weisen vorzugsweise eine Dicke T von 0,3 mm und eine Breite R von 0,5 mm auf. Die Maschen 531 weisen vorzugsweise eine Länge LM von 3,5 mm und eine Breite TM von 2,5 mm auf.

### Bezugszeichen

- 100: Windenergieanlage
- 102: Turm
- 104: Gondel
- 106: Rotor
- 108: Rotorblätter
- 110: Spinner
- 200: Holmgurt
- 210: erstes Ende
- 220: zweites Ende
- 300: Lage(n) erstes Faserverbundmaterial
- 400: Lage(n) zweites Faserverbundmaterial
- 410: Bereich der Zurückschäftung
- 501, 502: Rezeptoren
- 510: Rotorblattspitze
- 521: Holmgurt mit erstem Faserverbundmaterial
- 522: Holmgurt mit erstem und zweitem Faserverbundmaterial
- 530: elektrisch leitfähige Folienlage
- 531: Masche
- 532: Steg
- L: Längserstreckung
- Q: Quererstreckung
- D: Dicke
- E: Erstreckung der Folienlage in Richtung der Längserstreckung des Rotorblatts
- TM: Breite der Masche
- LM: Länge der Masche
- R: Breite des Stegs
- T: Dicke des Stegs

## Patentansprüche

1. Rotorblatt (108) einer Windenergieanlage (100) mit einem Holmgurt (200) mit
- einer Längserstreckung (L) von einem ersten Ende (210) zu einem zweiten Ende (220), einer Quererstreckung (Q) orthogonal zur Längserstreckung (L) und einer Dicke (D) & orthogonal zur Längserstreckung (L) und zur Quererstreckung (Q), wobei das erste Ende (210) das Ende des Holmgurtes (200) repräsentiert, das im Bereich einer Wurzel des Rotorblatts (108) angeordnet ist und das zweite Ende (220) das Ende der Holmgurtes (200) repräsentiert, das im Bereich einer Spitze des Rotorblatts (108) angeordnet ist,
- mindestens zwei Lagen eines ersten Faserverbundmaterials (300), und
- mindestens eine Lage eines zweiten Faserverbundmaterials (400), wobei
- das erste Faserverbundmaterial ein anderes Matrixmaterial und/oder andere Fasern aufweist als das zweite Faserverbundmaterial,
- das zweite Faserverbundmaterial in einem Abschnitt angrenzend an das zweite Ende (220) in Richtung der Dicke (D) zwischen den mindestens zwe Lagen des ersten Faserverbundmaterials angeordnet ist,
- die mindestens eine Lage des zweiten Faserverbundmaterials (400) vor dem zweiten Ende (220) endet, wobei die Fasern des zweiten Faserverbundmaterials Kohlenstofffasern umfassen und die Fasern des ersten Faserverbundmaterials anorganische Fasern, nämlich nicht elektrisch leitfähige Fasern, umfassen,
wobei sich die Anzahl der Lagen des ersten Faserverbundmaterials (300) zum zweiten Ende (220) hin reduziert, wobei jedoch in dem oben genannten Abschnitt angrenzend an das zweite Ende (220) enthaltend Lagen des ersten und des zweiten Faserverbundmaterials (300, 400), zwei äußere Lagen, bestehend aus dem ersten Faserverbundmaterial (300), verbleiben, damit die Lage oder die Lagen des zweiten Faserverbundmaterials (400) zwischen diesen zwei äußeren Lagen des ersten Faserverbundmaterials (300) angeordnet sind, und
das zweite Faserverbundmaterial von dem ersten Faserverbundmaterial umgeben ist, um das Blitzeinschlagrisiko zu reduzieren.

2. Rotorblatt (108) nach dem vorstehenden Anspruch,
wobei ein Bereich am zweiten Ende (220) mindestens eine Lage des ersten Faserverbundmaterials (300) umfasst.

3. Rotorblatt (108) nach mindestens einem der vorstehenden Ansprüche,
mit mindestens zwei Lagen des zweiten Faserverbundmaterials (400),
wobei die Anzahl der Lagen des zweiten Faserverbundmaterials (400) sich zum zweiten Ende (220) hin reduziert.

4. Rotorblatt (108) nach mindestens einem der vorstehenden Ansprüche,
mit mindestens drei oder mehr Lagen des ersten Faserverbundmaterials (300) und/oder mindestens drei oder mehr Lagen des zweiten Faserverbundmaterials (400), und/oder
wobei die mindestens eine Lage des zweiten Faserverbundmaterials (400) zwei äußere, sich gegenüberliegende Seiten aufweist, die jeweils durch eine flächige Ausdehnung der Lagen in Längserstreckung (L) und Quererstreckung (Q) gebildet werden,
wobei auf den beiden Seiten der mindestens einen Lage des zweiten Faserverbundmaterials (400) die gleiche Anzahl an Lagen des ersten Faserverbundmaterials angeordnet ist (300).

5. Rotorblatt (108) nach mindestens einem der vorstehenden Ansprüche, wobei die Fasern des zweiten Faserverbundmaterials Kohlenstofffasern sind und/oder
wobei die Fasern des ersten Faserverbundmaterials anorganische Fasern sind, und/oder
wobei die Fasern des ersten Faserverbundmaterials Glasfasern umfassen odersind, und/oder
wobei das Matrixmaterial des ersten Faserverbundmaterials und/oder des zweiten Faserverbundmaterials
- Kunststoff umfasst oder daraus besteht und der Kunststoff vorzugsweise ein Thermoplast und/oder ein Duroplast umfasst oder daraus besteht und/oder
- Zement umfasst oder daraus besteht, und/oder
- Beton umfasst oder daraus besteht, und/oder
- Keramik umfasst oder daraus besteht.

6. Rotorblatt (108) nach mindestens einem der vorstehenden Ansprüche, wobei Lagen des ersten Faserverbundmaterials (300) und die Lagen des zweiten Faserverbundmaterials (400) zwischen mindestens zwei äußeren Lagen des ersten Faserverbundmaterials (300) angeordnet sind, und/oder wobei die Fasern des ersten Faserverbundmaterials und/oder des zweiten Faserverbundmaterials im Wesentlichen parallel zur Richtung der Längserstreckung (L) verlaufen.

7. Rotorblatt (108) nach mindestens einem der vorstehenden Ansprüche, mit
- einer elektrisch leitfähigen Folienlage und einer Blitzfangeinrichtung eines Blitzschutzsystems, wobei die elektrisch leitfähige Folienlage mit der Blitzfangeinrichtung über eine elektrisch leitfähige Verbindung verbunden ist.

8. Rotorblatt (108) nach dem vorstehenden Anspruch, wobei
- die Folienlage eine Erstreckung in Richtung einer Längserstreckung des Rotorblatts aufweist, die vorzugsweise maximal 1/5, insbesondere maximal 1/10 oder maximal 1/20 oder maximal 1/50 der Längserstreckung des Rotorblatts beträgt; und/oder
- die Folienlage einen Bereich in Richtung einer Längserstreckung des Rotorblatts abdeckt, in dem die mindestens eine Lage des zweiten Faserverbundmaterials endet; und/oder
- die Folienlage in einer äußeren Hälfte einer quer Längserstreckung des Rotorblatts gemessenen Dicke einer Rotorblattwandung angeordnet ist, insbesondere in einem äußeren Drittel oder einem äußeren Viertel oder einem äußeren Zehntel oder einem äußeren Fünfzigstel oder einem äußeren Hundertstel; und/oder
- die Folienlage auf einer oder mehreren Lagen Faserverbundmaterial angeordnet ist, die vorzugsweise keine für die Auslegung des Rotorblatts relevanten Trageigenschaften aufweist bzw. aufweisen; und/oder
- die Folienlage angeordnet und ausgebildet ist, einer erwarteten Blitzstrombelastung zu widerstehen; und/oder
- die Folienlage mehrere Ausnehmungen und/oder Maschen aufweist, die vorzugsweise in einem regelmäßigen Muster angeordnet sind.

9. Windenergieanlage (100) mit einem Turm (102), einer Gondel (104) und einem Rotor (106), **dadurch gekennzeichnet, dass** der Rotor (106) mindestens ein Rotorblatt nach mindestens einem der vorherigen Ansprüche 1-8 aufweist.

10. Verfahren zur Herstellung eines Rotorblatts (108) nach mindestens einem der vorstehenden Ansprüche 1-8, umfassend Herstellen eines Holmgurts (200) mit einer Längserstreckung (L) von einem ersten Ende (210) zu einem zweiten Ende (220), einer Quererstreckung (Q) orthogonal zur Längserstreckung (L) und einer Dicke (D) orthogonal zur Längserstreckung (L) und zur Quererstreckung (Q), und Einbringen des Holmgurts (200) derart, dass das erste Ende (210) das Ende des Holmgurtes (200) repräsentiert, das im Bereich einer Wurzel des Rotorblatts (108) angeordnet ist und das zweite Ende (220) das Ende der Holmgurtes (200) repräsentiert, das im Bereich einer Spitze des Rotorblatts (108) angeordnet ist, das Herstellen des Holmgurts (200) umfassend die Schritte
- Verlegen von mindestens zwei Lagen eines ersten Faserverbundmaterials (300),
- Verlegen von mindestens einer Lage eines zweiten Faserverbundmaterials (400) derart, dass
- das zweite Faserverbundmaterial in einem Abschnitt angrenzend an das zweite Ende (220) in Richtung der Dicke (D) zwischen mindestens zwei Lagen des ersten Faserverbundmaterials (300) angeordnet ist, und
- die mindestens eine Lage des zweiten Faserverbundmaterials (400) vor dem zweiten Ende (220) endet,
- wobei das erste Faserverbundmaterial ein anderes Matrixmaterial und/oder andere Fasern aufweist als das zweite Faserverbundmaterial,
- wobei die Fasern des zweiten Faserverbundmaterials Kohlenstofffasern umfassen und die Fasern des ersten Faserverbundmaterials anorganische Fasern, nämlich nicht elektrisch leitfähige Fasern, umfassen,
- wobei sich die Anzahl der Lagen des ersten Faserverbundmaterials (300) zum zweiten Ende (220) hin reduziert, wobei jedoch in dem oben genannten Abschnitt angrenzend an das zweite Ende (220) enthaltend Lagen des ersten und des zweiten Faserverbundmaterials (300, 400), zwei äußere Lagen, bestehend aus dem ersten Faserverbundmaterial (300), verbleiben, damit die Lage oder die Lagen des zweiten Faserverbundmaterials (400) zwischen diesen zwei äußeren Lagen des ersten Faserverbundmaterials (300) angeordnet sind und
- das zweite Faserverbundmaterial von dem ersten Faserverbundmaterial umgeben ist, um das Blitzeinschlagrisiko zu reduzieren.

11. Verfahren zur Herstellung eines Rotorblatts (108) nach dem vorstehenden Anspruch,
wobei mindestens zwei Lagen des zweiten Faserverbundmaterials (400) derart verlegt werden, dass sich die Anzahl der Lagen des zweiten Faserverbundmaterials (400) zum zweiten Ende (220) hin reduziert.

12. Verfahren zur Herstellung eines Rotorblatts (108) nach mindestens einem der vorstehenden Ansprüche 10-11, umfassend
- Einbringen einer elektrisch leitfähigen Folienlage und Verbinden der Folienlage mit einer Blitzfangeinrichtung eines Blitzschutzsystems über eine elektrisch leitfähige Verbindung.

## Claims

1. A rotor blade (108) of a wind power installation (100) with a spar cap (200), having a longitudinal extent (L) from a first end (210) to a second end (220), a transverse extent (Q) orthogonal to the longitudinal extent (L), and a thickness (D) orthogonal to the longitudinal extent (L) and to the transverse extent (Q), wherein
the first end (210) represents the end of the spar cap (200), said end being disposed in the region of a root of the rotor blade (108) and the second end (220) represents the end of the spar cap (200), said end being disposed in the region of a tip of the rotor blade (108),
- at least two tiers of a first fiber composite material (300), and
- at least one tier of a second fiber composite material (400),
wherein
- the first fiber composite material has a matrix material and/or fibers which is/are different from that/those of the second fiber composite material;
- the second fiber composite material is disposed in a portion adjacent to the second end (220), in the direction of the thickness (D) between the at least two tiers of the first fiber composite material;
- the at least one tier of the second fiber composite material (400) terminates ahead of the second end (220),
wherein the fibers of the second fiber composite material comprise carbon fibers and the fibers of the first fiber composite material comprise inorganic fibers, namely electrically non-conductive fibers, wherein the number of tiers of the first fiber composite material (300) is reduced toward the second end (220), wherein in the above-mentioned section adjacent to the second end (220) containing tiers of the first and of the second fiber composite material (300,400), two external tiers of the first fiber composite material (300) remain, in order for the tier or the tiers of the second fiber composite material (400) to be disposed between these two external tiers of the first fiber composite material (300), and the second fiber composite material is surrounded by the first fiber composite material to decrease the risk of a lightning strike.

2. The rotor blade (108) as claimed in the preceding claim,
wherein a region at the second end (220) comprises at least one tier of the first fiber composite material (300).

3. The rotor blade (108) as claimed in at least one of the preceding claims,
having at least two tiers of the second fiber composite material (400), wherein the number of tiers of the second fiber composite material (400) is reduced toward the second end (220).

4. The rotor blade (108) as claimed in at least one of the preceding claims,
having at least three or more tiers of the first fiber composite material (300) and/or having at least three or more tiers of the second fiber composite material (400), and/or
wherein the at least one tier of the second fiber composite material (400) has two external, mutually opposite, sides which are in each case formed by a planar expanse of the tiers in the longitudinal extent (L) and the transverse extent (Q), wherein the same number of tiers of the first fiber composite material (300) is disposed on both sides of the at least one tier of the second fiber composite material (400).

5. The rotor blade (108) as claimed in at least one of the preceding claims,
wherein the fibers of the second fiber composite material are carbon fibers, and/or wherein the fibers of the first fiber composite material are inorganic fibers, and/or wherein the fibers of the first fiber composite material comprise or are glass fibers and/or
wherein the matrix material of the first fiber composite material and/or of the second fiber composite material
- comprises or is composed of plastics material, and the plastics material preferably comprises or is composed of a thermoplastic and/or thermosetting material, and/or
- comprises or is composed of cement, and/or
- comprises or is composed of concrete, and/or
- comprises or is composed of ceramic.

6. The rotor blade (108) as claimed in at least one of the preceding claims,
wherein tiers of the first fiber composite material (300) and the tiers of the second fiber composite material (400) are disposed between at least two external tiers of the first fiber composite material (300) and/or
wherein the fibers of the first fiber composite material and/or of the second fiber composite material run so as to be substantially parallel with the direction of the longitudinal extent (L).

7. The rotor blade (108) as claimed in at least one of the preceding claims, with
- an electrically conductive foil/film tier and a lightning interception installation of a lightning protection system, wherein the electrically conductive foil/film tier is connected to the lightning interception installation by way of an electrically conductive connection.

8. The rotor blade (108) as claimed in the preceding claim, wherein
- the foil/film tier has an extent in the direction of a longitudinal extent of the rotor blade, said extent preferably being at most 1/5, in particular at most 1/10, or at most 1/20, or at most 1/50, of the longitudinal extent of the rotor blade; and/or
- the foil/film covers a region in the direction of a longitudinal extent of the rotor blade in which the at least one tier of the second fiber composite material terminates; and/or
- the foil/film tier is disposed in an external half of a thickness of a rotor blade wall that is measured transversely longitudinal direction of the rotor blade, in particular in an external third, or an external quarter, or an external tenth, or an external fiftieth, or an external hundredth; and/or
- the foil/film tier is disposed on one or a plurality of tiers of fiber composite material which does/do not have any structural properties that are relevant to the layout design of the rotor blade; and/or
- the foil/film tier is disposed and configured for resisting an expected lightning current load; and/or
- the foil/film tier has a plurality of clearances and/or meshes which are preferably disposed in a regular pattern.

9. A wind power installation (100) having a tower (102), a gondola (104), and a rotor (106), **characterized in that** the rotor (106) has at least one rotor blade as claimed in at least one of the preceding claims 1 to 8,

10. A method for producing a rotor blade (108) as claimed in at least one of the preceding claims 1-8, comprising producing a spar cap (200) having a longitudinal extent (L) from a first end (210) to a second end (220), a transverse extent (Q) orthogonal to the longitudinal extent (L), and a thickness (D) orthogonal to the longitudinal extent (L) and to the transverse extent (Q), and
incorporating a spar cap (200) so that the first end (210) represents the end of the spar cap (200), said end being disposed in the region of a root of the rotor blade (108) and the second end (220) represents the end of the spar cap (200), said end being disposed in the region of a tip of the rotor blade (108),
the production of the spar cap (200) comprising the steps
- laying up at least two tiers of a first fiber composite material (300);
- laying up at least one tier of a second fiber composite material (400) in such a manner that
- the second fiber composite material is disposed in a portion adjacent to the second end (220), in the direction of the thickness (D) between at least two tiers of the first fiber composite material (300); and
- the at least one tier of the second fiber composite material (400) terminates ahead of the second end (220);
- wherein the first fiber composite material has a matrix material and/or fibers which is/are different from that/those of the second fiber composite material,
- wherein the fibers of the second fiber composite material comprise carbon fibers and the fibers of the first fiber composite material comprise inorganic fibers, namely electrically non-conductive fibers,
- wherein the number of tiers of the first fiber composite material (300) is reduced toward the second end (220), wherein in the above-mentioned section adjacent to the second end (220) containing tiers of the first and of the second fiber composite material (300,400), two external tiers of the first fiber composite material (300) remain, in order for the tier or the tiers of the second fiber composite material (400) to be disposed between these two external tiers of the first fiber composite material (300), and the second fiber composite material is surrounded by the first fiber composite material to decrease the risk of a lightning strike.

11. The method for producing a rotor blade (108)as claimed in the preceding claim,
wherein at least two tiers of the second fiber composite material (400) are laid up in such a manner that the number of tiers of the second fiber composite material (400) is reduced toward the second end (220).

12. A method for producing a rotor blade (108) as claimed in one of preceding claims 10 to 11, said method comprising
- incorporating an electrically conductive foil/film tier and connecting the foil/film tier to a lightning interception installation of a lightning protection system by way of an electrically conductive connection.

## Revendications

1. Pale de rotor (108) d'une éolienne (100) avec une bride de longeron (200) avec
- une étendue longitudinale (L) d'une première extrémité (210) à une deuxième extrémité (220), une étendue transversale (Q) orthogonale à l'étendue longitudinale (L) et une épaisseur (D) orthogonale à l'étendue longitudinale (L) et à l'étendue transversale (Q), dans laquelle
la première extrémité (210) représente l'extrémité de la bride de longeron (200) qui est agencée dans la zone d'une racine de la pale de rotor (108) et la deuxième extrémité (220) représente l'extrémité de la bride de longeron (200) qui est agencée dans la zone d'une pointe de la pale de rotor (108),
- au moins deux couches d'un premier matériau composite de fibre (300), et
- au moins une couche d'un deuxième matériau composite de fibre (400), dans laquelle
- le premier matériau composite de fibre présente un autre matériau de matrice et/ou d'autres fibres que le deuxième matériau composite de fibre,
- le deuxième matériau composite de fibre est agencé dans une section contiguë à la deuxième extrémité (220) en direction de l'épaisseur (D) entre les au moins deux couches du premier matériau composite de fibre,
- l'au moins une couche du deuxième matériau composite de fibre (400) se termine avant la deuxième extrémité (220),
dans laquelle les fibres du deuxième matériau composite de fibre comportent des fibres de carbone et les fibres du premier matériau composite de fibre comportent des fibres inorganiques, à savoir des fibres non électroconductrices,
dans laquelle le nombre de couches du premier matériau composite de fibre (300) se réduit vers la deuxième extrémité (220), dans laquelle dans la section susmentionnée contigüe à la deuxième extrémité (220) contenant des couches du premier et du deuxième matériau composite de fibre (300, 400), deux couches extérieures se composant du premier matériau composite de fibre (300) restent toutefois, afin que la couche ou les couches du deuxième matériau composite de fibre (400) soient agencées entre ces deux couches extérieures du premier matériau composite de fibre (300), et
le deuxième matériau composite de fibre est entouré par le premier matériau composite de fibre afin de réduire le risque de coup de foudre.

2. Pale de rotor (108) selon la revendication précédente,
dans laquelle une zone sur la deuxième extrémité (220) comporte au moins une couche du premier matériau composite de fibre (300).

3. Pale de rotor (108) selon au moins l'une quelconque des revendications précédentes,
avec au moins deux couches du deuxième matériau composite de fibre (400),
dans laquelle le nombre de couches du deuxième matériau composite de fibre (400) se réduit vers la deuxième extrémité (220).

4. Pale de rotor (108) selon au moins l'une quelconque des revendications précédentes,
avec au moins trois couches ou plus du premier matériau composite de fibre (300) et/ou au moins trois couches ou plus du deuxième matériau composite de fibre (400), et/ou
dans laquelle l'au moins une couche du deuxième matériau composite de fibre (400) présente deux côtés extérieurs opposés qui sont formés respectivement par une extension plane des couches dans l'étendue longitudinale (L) et l'étendue transversale (Q),
dans laquelle le même nombre de couches du premier matériau composite de fibre est agencé (300) sur les deux côtés de l'au moins une couche du deuxième matériau composite de fibre (400).

5. Pale de rotor (108) selon au moins l'une quelconque des revendications précédentes,
dans laquelle les fibres du deuxième matériau composite de fibre sont des fibres de carbone et/ou
dans laquelle les fibres du premier matériau composite de fibre sont des fibres inorganiques, et/ou
dans laquelle les fibres du premier matériau composite de fibre comportent ou sont des fibres de verre, et/ou
dans laquelle le matériau de matrice du premier matériau composite de fibre et/ou du deuxième matériau composite de fibre
- comporte une matière plastique ou s'en compose et la matière plastique comporte de préférence un thermoplaste et/ou un duroplaste ou s'en compose et/ou
- comporte du ciment ou s'en compose, et/ou
- comporte du béton ou s'en compose, et/ou
- comporte de la céramique ou s'en compose.

6. Pale de rotor (108) selon au moins l'une quelconque des revendications précédentes,
dans laquelle des couches du premier matériau composite de fibre (300) et les couches du deuxième matériau composite de fibre (400) sont agencées entre au moins deux couches extérieures du premier matériau composite de fibre (300), et/ou
dans laquelle les fibres du premier matériau composite de fibre et/ou du deuxième matériau composite de fibre s'étendent sensiblement parallèlement au sens de l'étendue longitudinale (L).

7. Pale de rotor (108) selon au moins l'une quelconque des revendications précédentes, avec
- une couche de film électroconductrice et un dispositif capteur de foudre d'un système de protection contre la foudre, dans laquelle la couche de film électroconductrice est reliée au dispositif capteur de foudre par le biais d'une liaison électroconductrice.

8. Pale de rotor (108) selon la revendication précédente, dans laquelle
- la couche de film présente une étendue en direction d'une étendue longitudinale de la pale de rotor qui s'élève de préférence au maximum à 1/5, en particulier au maximum à 1/10 ou au maximum à 1/20 ou au maximum à 1/50 de l'étendue longitudinale de la pale de rotor ; et/ou
- la couche de film recouvre une zone en direction d'une étendue longitudinale de la pale de rotor, dans laquelle l'au moins une couche du deuxième matériau composite de fibre se termine ; et/ou
- la couche de film est agencée dans une moitié extérieure d'une épaisseur mesurée transversalement à l'étendue longitudinale de la pale de rotor d'une paroi de pale de rotor, en particulier dans un tiers extérieur ou un quart extérieur ou un dixième extérieur ou un cinquantième extérieur ou un centième extérieur ; et/ou
- la couche de film est agencée sur une ou plusieurs couches de matériau composite de fibre, qui ne présente(nt) de préférence aucune propriété porteuse pertinente pour la conception de la pale de rotor ; et/ou
- la couche de film est agencée et réalisée afin de résister à une sollicitation de courant de foudre attendue ; et/ou
- la couche de film présente plusieurs évidements et/ou mailles qui sont agencé(e)s de préférence dans un motif régulier.

9. Eolienne (100) avec une tour (102), une nacelle (104) et un rotor (106), **caractérisée en ce que** le rotor (106) présente au moins une pale de rotor selon au moins l'une quelconque des revendications précédentes 1 à 8.

10. Procédé de fabrication d'une pale de rotor (108) selon au moins l'une quelconque des revendications précédentes 1 à 8, comprenant la fabrication d'une bride de longeron (200) avec une étendue longitudinale (L) d'une première extrémité (210) à une deuxième extrémité (220), une étendue transversale (Q) orthogonale à l'étendue longitudinale (L) et une épaisseur (D) orthogonale à l'étendue longitudinale (L) et à l'étendue transversale (Q), et
l'introduction de la bride de longeron (200) de telle manière que la première extrémité (210) représente l'extrémité de la bride de longeron (200) qui est agencée dans la zone d'une racine de la pale de rotor (108) et la deuxième extrémité (220) représente l'extrémité de la bride de longeron (200) qui est agencée dans la zone d'une pointe de la pale de rotor (108), la fabrication de la bride de longeron (200) comprenant les étapes
- la pose d'au moins deux couches d'un premier matériau composite de fibre (300),
- la pose d'au moins une couche d'un deuxième matériau composite de fibre (400) de telle manière que
- le deuxième matériau composite de fibre soit agencé dans une section contigüe à la deuxième extrémité (220) en direction de l'épaisseur (D) entre au moins deux couches du premier matériau composite de fibre (300), et
- l'au moins une couche du deuxième matériau composite de fibre (400) se termine avant la deuxième extrémité (220),
- dans laquelle le premier matériau composite de fibre présente un autre matériau de matrice et/ou d'autres fibres que le deuxième matériau composite de fibre,
- dans laquelle les fibres du deuxième matériau composite de fibre comportent des fibres de carbone et les fibres du premier matériau composite de fibre comporte des fibres inorganiques, à savoir des fibres non électroconductrices,
- dans laquelle le nombre de couches du premier matériau composite de fibre (300) se réduit vers la deuxième extrémité (220), dans laquelle dans la section susmentionnée contiguë à la deuxième extrémité (220) contenant des couches du premier et du deuxième matériau composite de fibre (300, 400), deux couches extérieures se composant du premier matériau composite de fibre (300) restent toutefois, afin que la couche ou les couches du deuxième matériau composite de fibre (400) soient agencées entre ces deux couches extérieures du premier matériau composite de fibre (300) et
- le deuxième matériau composite de fibre est entouré par le premier matériau composite de fibre afin de réduire le risque de coup de foudre.

11. Procédé de fabrication d'une pale de rotor (108) selon la revendication précédente,
dans lequel au moins deux couches du deuxième matériau composite de fibre (400) sont posées de telle manière que le nombre de couches du deuxième matériau composite de fibre (400) se réduise vers la deuxième extrémité (220).

12. Procédé de fabrication d'une pale de rotor (108) selon au moins
l'une quelconque des revendications précédentes 10 à 11, comprenant
- l'introduction d'une couche de film électroconductrice et la liaison de la couche de film avec un dispositif capteur de foudre d'un système de protection contre la foudre par le biais d'une liaison électroconductrice.
